Europäisches Patentamt

European Patent Office

Office européen des brevets

(11) Veröffentlichungsnummer: **0 416 160 A1**

## (12) EUROPÄISCHE PATENTANMELDUNG

(21) Anmeldenummer: 89116575.5

(22) Anmeldetag: 07.09.89

(51) Int. Cl.5: **G01N 29/00**, G01N 27/00

(43) Veröffentlichungstag der Anmeldung:
**13.03.91 Patentblatt 91/11**

(84) Benannte Vertragsstaaten:
**DE FR GB IT**

(71) Anmelder: **Siemens Aktiengesellschaft**
**Wittelsbacherplatz 2**
**W-8000 München 2(DE)**

(72) Erfinder: **Dickert, Franz, Prof. Dr.**
**August-Euler-Weg 10**
**W-8500 Nürnberg(DE)**
Erfinder: **Mages, Gert, Dr.**
**Grabenäcker 5**
**W-8551 Hemhofen(DE)**
Erfinder: **Bulst, Wolf-Eckhard, Dipl.-Phys.**
**Hermann-Pünder-Strasse 15**
**W-8000 München 83(DE)**
Erfinder: **Bertlein, Gerhard, Dipl.-Chem.**
**An der weissen Marter 6**
**W-8530 Neustadt/A.(DE)**

(54) **Anordnung zur Messung des Partialdruckes von Gasen oder Dämpfen.**

(57) Die Anordnung enthält einen SAW-Resonator, der als Interdigitalwandler wirkende Elektroden sowie Reflektoren enthält und mit einer Beschichtung versehen ist, deren elektrische Eigenschaften sich unter der Einwirkung der Gase ändern. Erfindungsgemäß besteht die Beschichtung (18) aus einem hydrophoben Metallkomplex, dessen Ionenbeweglichkeit oder Ionenkonzentration sich unter der Einwirkung der Gase ändert, oder aus einem Gemisch von mindestens einem basischen oder sauren Farbbildner oder Farbstoff mit mindestens einer komplementären sauren oder basischen Verbindung. Diese Ausführungsform der Anordnung zeigt zusätzlich einen Masseeffekt, d.h. die Frequenz der Oberflächenwellen ändert sich in Abhängigkeit von der Masse der Beschichtung und einen verminderten Quereffekt. Man erhält einen besonders empfindlichen Sensor.

FIG 1

EP 0 416 160 A1

## ANORDNUNG ZUR MESSUNG DES PARTIALDRUCKES VON GASEN ODER DÄMPFEN

Die Erfindung bezieht sich auf eine Anordnung zur Messung des Partialdruckes von Gasen oder Dämpfen, insbesondere von Lösungsmitteldämpfen, mit einem SAW-Resonator (surface acoustic wave), der mit Interdigitalwandler wirkenden Elektroden versehen ist sowie Reflektoren enthält und mit einer Beschichtung versehen ist, deren elektrische Eigenschaften sich unter der Einwirkung der Gase ändern.

Es ist bekannt, daß akustische Oberflächenwellen-Bauelemente, sogenannte SAW-Sensoren (surface acoustic wave), deren Oberfläche mit einer Beschichtung aus einem chemosensitiven Material versehen ist, als Sensoren zur Messung des Partialdruckes bzw. der Konzentration von Gasen und Dämpfen verwendet werden können.

Eine bekannte Ausführungsform eines derartigen Sensors für Flüssigkeiten und feste Körper enthält ein Substrat aus piezoelektrischem Material, das mit metallischen Elektroden zur Anregung von akustischen Oberflächenwellen versehen ist. Eine im Oberflächenbereich zwischen den Elektroden angeordnete Beschichtung aus einem Polymer mit einer Dicke von wenigstens 250 nm ändert unter der Einwirkung der Gase ihre elektrischen Eigenschaften und beeinflußt dadurch die Amplitude, Phasenlage oder Frequenz der Oberflächenwellen. Eine der Elektroden ist an einen Oszillator als Sender, und die andere an einen Detektor als Empfänger angeschlossen. Mit der ersten Elektrode wird eine Oberflächenwelle mit der Frequenz des Oszillators angeregt. Die andere Elektrode empfängt diese Oberflächenwelle und wandelt sie in ein elektrisches Signal um, das dem Detektor zugeführt wird. Die Änderung der Oberflächenwelle unter der Gaseinwir kung, insbesondere die Frequenzänderung, wird vom Detektor registriert und dient als Meßgröße für die zu bestimmende Komponente in der Flüssigkeit (US-Patent 4 312 228).

In der Ausführungsform als SAW-Resonator ist dieser SAW-Sensor mit zwei Reflektoren versehen, deren Abstand ein ganzzahliges Vielfaches der halben Wellenlänge λ/2 der akustischen Oberflächenwelle beträgt. Zwischen den Reflektoren sind die beiden Elektroden angeordnet, die in dieser Ausführungsform als ineinandergreifende Kammstrukturen, sogenannte Interdigitalwandler, ausgeführt sind. Die in dieser Ausführungsform von einem Oszillator in der einen Elektrode angeregte Oberflächenwelle wird von beiden Reflektoren reflektiert und von der zweiten Elektrode aufgenommen. Bei der Resonanzfrequenz bildet sich in dieser Anordnung zwischen den Reflektoren eine akustische stehende Welle aus. Die zu messenden chemischen Bestandteile ändern die Geschwindigkeit der Oberflächenwelle und damit ihre Frequenz (US-Patent 4 598 224).

Zur Messung des Partialdruckes von Gasen oder Dämpfen, insbesondere von Lösungsmitteldämpfen mit einer Beschichtung, deren elektrische oder optische Eigenschaften sich unter der Einwirkung des Gases ändern, ist bekanntlich ein Sensormaterial geeignet, das wenigstens teilweise aus wenigstens einem hydrophoben Metallkomplex besteht, dessen Ionenbeweglichkeit oder Ionenkonzentration sich unter der Einwirkung der Gase ändert. Das Sensormaterial kann vorzugsweise makrocyclische Metallkomplexe, insbesondere Kronenether und Kryptanden, enthalten. Die hydrophoben Eigenschaften dieser Beschichtung ermöglichen insbesondere die Messung von halogenierten und aromatischen Kohlenwasserstoffen durch Messung der elektrischen Leitfähigkeit. Der Sensoreffekt beruht auf zwei Schritten: Zunächst durch die Absorption von Lösungsmitteldämpfen durch feste makrocyclische Schichten und anschließende chemische Reaktion (Angewandte Chemie, Bd. 101 (1989), Heft 6, Seiten 833 und 834).

Ferner sind zur Messung des Partialdruckes von Gasen oder Dämpfen optische Filter mit reversibler Farbänderung geeignet, die aus einem Gemisch von mindestens einem basischen oder sauren Farbbildner oder Farbstoff, vorzugsweise des Triphenylmethan-Systems sowie Phthaleine oder Sulfonphthaleine, mit mindestens einer komplementären sauren oder basischen Verbindung enthalten (E-OS 0 193 036).

Es ist außerdem bekannt, daß substituierte 3,3-Diphenylphthalide als Sensormaterial für optochemische Sensoren für polare Lösungsmitteldämpfe geeignet sind. Mit Kristallviolettlacton, das als Sensorschicht in einer optischen Transmissionsanordnung verwendet wird, erhält man beispielsweise bei einer Erhöhung der relativen Feuchte eines Luftstromes von 30 % auf 70 % eine Änderung der optischen Absorption A von etwa 0,018. Die gleiche Änderung erhält man bei 30 % relativer Feuchte und einem Gehalt von etwa 0,35 % Ethanol im Luftstrom. Der Einfluß der Feuchte auf das Meßergebnis, der sich im waagerechten Abstand der Kennlinien bemerkbar macht, die sogenannte Querempfindlichkeit (nonselectivity oder cross-sensitivity), beträgt somit etwa 0,35 % (Anal. Chem., Vol. 60, (1988), Seiten 1377 bis 1380).

Der Erfindung liegt nun die Aufgabe zugrunde, die bekannten Sensoren mit SAW-Resonatoren zu verbessern, insbesondere deren Empfindlichkeit zu erhöhen und ihre Ansprechzeit zu vermindern.

Die Erfindung beruht auf der Erkenntnis, daß sich bei der Verwendung der erwähnten hydrophoben Metallkomplexe sowie der Verwendung der erwähnten Farbbildner mit einer komplementären Verbindung in Verbindung mit den SAW-Resonatoren eine Verminderung der Querempfindlichkeit, d.h. des Einflusses der Feuchtigkeit auf das Meßergebnis, und außerdem ein zusätzlicher Dickeneffekt auftritt, der die Empfindlichkeit dieser Sensoren wesentlich erhöht. Die Erfindung besteht somit in den Merkmalen der Ansprüche 1 und 16. Mit dieser Anordnung erhält man einen empfindlichen Gassensor in Mikroausführung, der in einfacher Weise hergestellt werden kann. Die selektive Beschichtung hat eine Dicke von wenigstens 1 nm, vorzugsweise wenigstens 10 nm. Sie wird begrenzt durch ihren ungünstigen Einfluß auf das Ansprechverhalten des Sensors und wird deshalb im allgemeinen 250 nm nicht wesentlich überschreiten und insbesondere etwa 20 bis 200 nm betragen. Weitere besonders vorteilhafte Ausführungsformen ergeben sich aus den Unteransprüchen.

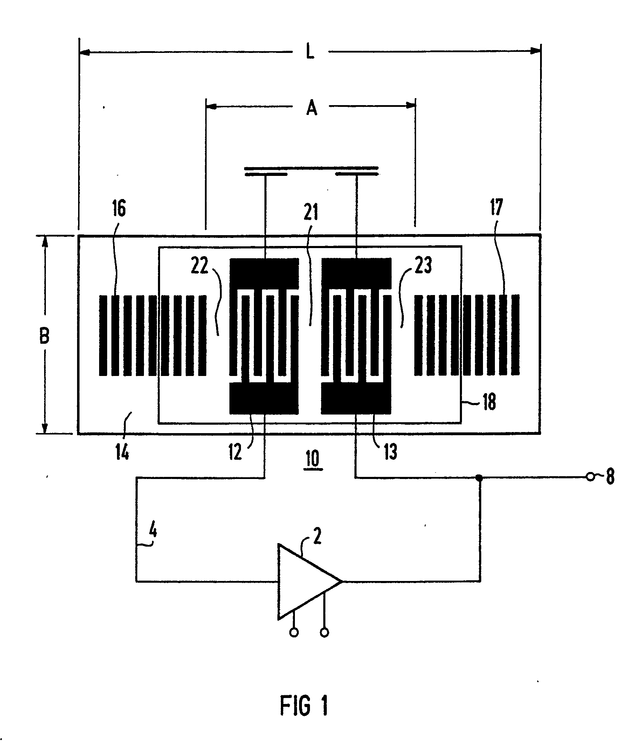

Zur weiteren Erläuterung der Erfindung wird auf die Zeichnung Bezug genommen, in deren Figur 1 der Aufbau eines SAW-Resonators gemäß der Erfindung und eine Schaltung zum Betrieb dieses Resonators schematisch veranschaulicht ist. In den Figuren 2 und 3 sind die Eigenschaften der Meßanordnung jeweils in einem Diagramm veranschaulicht.

In der Ausführungsform einer Anordnung zur Messung des Partialdruckes von Gasen ist im Rückkopplungszweig eines Verstärkers 2 in Reihe mit einem Phasenschieber 4, der in einfacher Weise aus einem kurzen Leitungsstück bestehen kann, ein SAW-Resonator 10 angeordnet. An den Ausgang 8 der Anordnung ist ein in der Figur nicht dargestellter Detektor, beispielsweise ein Frequenzzähler, angeschlossen. Der Oberflächenwellenresonator 10 ist mit zwei Elektroden 12 und 13 versehen, von denen die eine Elektrode 12 als Sender und die Elektrode 13 als Empfänger für Oberflächenwellen wirkt. Diese Elektroden 12 und 13 sind jeweils als ineinandergreifende Kammstruktur als sogenannte Interdigitalwandler ausgeführt und auf der Oberfläche eines Substrats 14 mit einer Länge L von beispielsweise etwa 9 mm und einer Breite B von beispielsweise etwa 2 mm angeordnet, das aus einem piezoelektrischen Material, vorzugsweise Quarz, bestehen kann. Mit dieser Anordnung erhält man eine Resonanzfrequenz $f_0$ von 300 MHz. Die beiden Elektroden 12 und 13 sind zwischen zwei Reflektoren 16 und 17 angeordnet, die jeweils etwa einige 100 Finger mit der Breite b = $\lambda/2$ enthalten und die jeweils im Abstand b voneinander angeordnet sind. Die Reflektoren 16 und 17 sind im Abstand A voneinander angeordnet, der ein ganzzahliges Vielfaches von $\lambda/2$ ist. Bei der Mittenfrequenz $f_0$ von beispielsweise 300 MHz bildet sich in dieser Ausführungsform eine akustische stehende Welle aus, welche die Resonanzspitze der Resonatorübertragungsfunktion hervorruft.

Die Elektrodenanordnung 12 und 13 mit den Reflektoren 16 und 17 ist mit einer selektiv wirkenden Beschichtung 18 versehen, von der zur besseren Übersichtlichkeit lediglich die Kontur angedeutet ist. Diese Beschichtung 18 mit einer Dicke von vorzugsweise etwa 20 bis 200 nm überdeckt sowohl die Elektroden als auch wenigstens zum Teil noch die Reflektoren 16 und 17 und besteht aus einem Material, das unter der Einwirkung von Gasen und Dämpfen ihre elektrischen Eigenschaften, beispielsweise die Leitfähigkeit oder die Kapazität und ihre mechanischen Eigenschaften, beispielsweise die Elastizität, ändert und dadurch die Frequenz, Amplitude oder Phasenlage der Oberflächenwellen beeinflußt. Diese Frequenzänderung wird von einem Detektor registriert und dient als Maß für die Konzentration bzw. den Partialdruck der auf die Beschichtung 18 einwirkenden Gase.

Ferner ist als Substrat Lithiumtantalat $LiTaO_3$ oder auch Lithiumniobat $LiNbO_3$ geeignet. Diese piezoelektrischen Materialien haben zwar größere Kopplungskonstanten als Quarz; sie weisen jedoch einen linearen Temperaturgang auf. Diese Materialien kommen somit bevorzugt für breitbandige Filter in Betracht.

Gemäß der Erfindung besteht die Beschichtung 18 wenigstens teilweise aus wenigstens einem hydrophoben Metallkomplex, dessen Ionenbeweglichkeit oder Ionenkonzentration sich unter der Einwirkung der Gase ändert. In einer besonderen Ausführungsform enthält diese Beschichtung 18 makrocyclische Metallkomplexe, insbesondere mit Liganden vom Typus Kronenether oder Kryptanden. Als Liganden können vorzugsweise §-Benzo[15]Krone-5 oder auch §-Benzo-Kryptanden, beispielsweise §-5,6-Benzo-4,7,13,16,21,24-hexaoxa-1,10-diazabicyclo[8.8.8]hexacosan gewählt werden, die unter der Bezeichnung §-Kryptand[2$_B$.2.2] bekannt sind. Die Metallkomplexe können vorzugsweise einen polymeren Kronenether oder Kryptanden enthalten, der an einem Metallion mit variabler Ladung koordiniert, beispielsweise an einem Natriumion $Na^+$ oder einem Kaliumion $K^+$ oder einem Magnesiumion $Mg^{++}$ oder an Übergangsmetallionen, beispielsweise Kobalt $Co^{++}$, Nickel $Ni^{++}$ oder Kupfer $Cu^{++}$. Besonders vorteilhaft sind polymere Strukturen, die stabile Sensorschichten ergeben.

Ferner geeignet sind macrocyclische Metallkomplexe mit Gegenionen variabler Nukleophilie, beispielsweise Chloridanionen $Cl^-$ oder Perchloratanionen $ClO_4^-$. Um die Ionenbildung zu begünstigen und Selektivität für den Sensor zu erzielen, kann das Sensormaterial vorzugsweise protische oder aprotische Cosubstanzen enthalten. Das sind Verbindungen, die zur Anionen- oder Kationensolvatation geeignet sind und somit positiv oder negativ geladene Teilchen stabilisieren können. Dies können beispielsweise feste oder auch polyfunktionelle Alkohole sein; besonders geeignet sind Pyrogallol und veretherte Polyethylenglykole.

Neben diesen hydrophoben Metallkomplexen mit Ionenleitung als Beschichtung 18 sind als Beschichtung auch optische Filter mit reversibler Farbänderung geeignet, die ein Gemisch von mindestens einem basischen oder sauren Farbbildner oder Farbstoff, vorzugsweise des Triphenylmethansystems, und mindestens einer komplementären sauren oder basischen Verbindung enthalten. Sie können als Farbbilder vorzugsweise Triphenylmethan-Systeme, insbesondere Kristallviolettlacton, enthalten. Als Farbstoff sind ebenfalls vorzugsweise solche des Triphenylmethan-Systems, insbesondere Phthaleine oder Sulfonphthaleine, geeignet. Als saure Verbindung können sie Bisphenol-A oder Salicylsäure oder auch diese beiden sauren Verbindungen enthalten. Als basische Verbindung ist vorzugsweise p-Toluidin oder p-Chloranilin geeignet. Eine Beschichtung 18, die wenigstens teilweise aus diesen Materialien besteht, zeigt ebenfalls einen Dickeneffekt und eine Verminderung der Querempfindlichkeit.

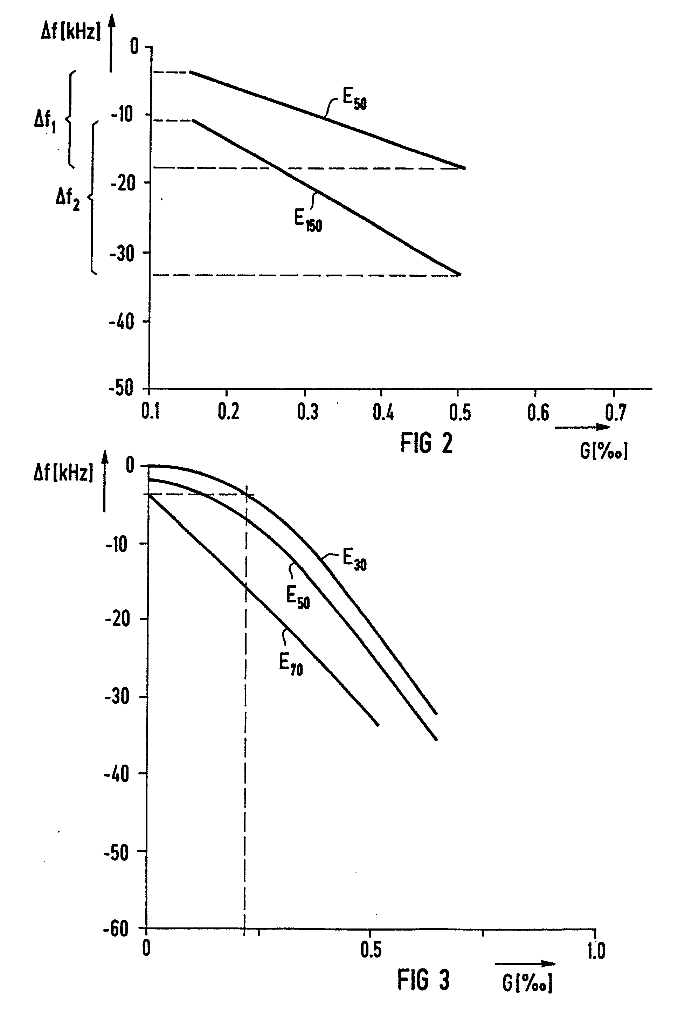

Der Dickeneffekt ist aus dem Diagramm der Figur 2 zu entnehmen, in dem die Frequenzänderung $\Delta f$ in kHz über dem Gehalt G eines Luftstromes über der Beschichtung 18 des SAW-Generators 10 an Ethanol in ‰ aufgetragen ist. Die Beschichtung 18 soll wenigstens teilweise aus Kristallviolettlacton als Farbstoff bestehen, das als Cosubstanz eine phenolische Säure, nämlich Bisphenol-A in einem Molverhältnis von 1:7,5, und ein Polymer, nämlich Polyvinylphenol in einem Molverhältnis von 1:1,5, enthält. Mit einer Schichtdicke von beispielsweise 50 nm der Beschichtung 18 erhält man gemäß der Kurve $E_{50}$ bei einer Änderung des Gehalts G an Ethanol von etwa 0,15 ‰ auf 0,5 ‰ eine Änderung $\Delta f_1$ der Resonanzfrequenz $\Delta f$ von etwa 4 bis 17, d.h. um etwa 13 kHz. Demgegenüber erhält man mit einer Schichtdicke von 150 nm gemäß der Kurve $E_{150}$ bei einer Änderung des Gehalts G des Luftstromes an Ethanol von etwa 0,15 bis 0,5 ‰ eine Frequenzänderung $\Delta f_2$ von etwa 11 bis 34, d.h. um etwa 23 kHz.

Im Diagramm gemäß Figur 3 ist ebenfalls die Frequenzänderung f in kHz über dem Gehalt G in ‰ an Ethanol im Luftstrom bei einer Dicke der Schicht 18 von 150 nm aufgetragen. Mit 30 % relativer Feuchte ergibt sich mit steigendem Gehalt G eine Frequenzänderung $\Delta f$ gemäß der Kennlinie $E_{30}$. Mit 50 % relativer Feuchte erhält man eine erhöhte Frequenzänderung $\Delta f$ entsprechend der Kennlinie $E_{50}$ und mit 70 % relativer Feuchte eine weitere Frequenzänderung gemäß der Kennlinie $E_{70}$. Wie dem Diagramm ferner zu entnehmen ist, erhält man mit einem Gehalt O und einer Erhöhung der relativen Feuchtigkeit von 30 % auf 70 % eine Frequenzänderung $\Delta f$ von 0 auf etwa -3,5 kHz. Die gleiche Frequenzänderung ergibt auch ein Gehalt von etwa 0,23 ‰ Ethanol bei 30 % relativer Feuchte entsprechend der Kennlinie $E_{30}$, wie es im Diagramm gestrichelt angedeutet ist. Die Querempfindlichkeit, d.h. der Einfluß der Änderung der Feuchte auf das Meßergebnis, der sich im waagerechten Abstand der Kennlinien bemerkbar macht, beträgt somit im ungünstigsten Falle nur etwa 0,23 ‰ (Anal. Chem., Vol. 60 (1988), Seiten 1377 bis 1380, insbes. Figur 4). Das Meßergebnis wird somit vom Gehalt an Luftfeuchtigkeit praktisch nicht beeinflußt.

## Ansprüche

1. Anordnung zur Messung des Partialdruckes von Gasen oder Dämpfen mit einem SAW-Resonator (surface acoustic wave), der mit als Interdigitalwandler wirkenden Elektroden versehen ist sowie Reflektoren enthält und mit einer Beschichtung versehen ist, deren elektrische Eigenschaften sich unter der Einwirkung der Gase ändern, **dadurch gekennzeichnet,** daß die Beschichtung (18) wenigstens teilweise aus wenigstens einem hydrophoben Metallkomplex besteht, dessen Ionenbeweglichkeit oder Ionenkonzentration sich unter der Einwirkung der Gase ändert.

2. Anordnung nach Anspruch 1, **dadurch gekennzeichnet,** daß die Beschichtung (18) macrocyclische Metallkomplexe enthält.

3. Anordnung nach Anspruch 2, **gekennzeichnet** durch Kronenether.

4. Anordnung nach Anspruch 3, **gekennzeichnet** durch §-Benzo[15]Krone-5.

5. Anordnung nach Anspruch 2, **gekennzeichnet** durch Kryptanden.

6. Anordnung nach Anspruch 5, **gekennzeichnet** durch §-Benzo-Kryptanden.

7. Anordnung nach Anspruch 6, gekennzeichnet durch §-Kryptand[$2_B$.2.2].

8. Anordnung nach Anspruch 1 oder 2 , **dadurch gekennzeichnet,** daß die Beschichtung (18) Metallionen mit variabler Ladung enthält.

9. Anordnung nach Anspruch 8, **gekennzeichnet** durch ein Natriumion $Na^+$ oder ein Kaliumion $K^+$ oder ein Magnesiumion $Mg^{++}$ oder ein Kobaltion $Co^{++}$ oder Nickelion $Ni^{++}$ oder Kupferion $Cu^{++}$.

10. Anordnung nach Anspruch 1 oder 2, **dadurch gekennzeichnet,** daß die Beschichtung (18) Metallkomplexe mit Gegenionen variabler Nukleophilie enthält.

11. Anordnung nach Anspruch 10, **gekennzeichnet** durch Chloridanionen $Cl^-$ oder Perchloratanionen $ClO_4^-$.

12. Anordnung nach einem der Ansprüche 1 bis 11, **dadurch gekennzeichnet,** daß die Beschichtung (18) wenigstens eine protische Cosubstanz enthält.

13. Anordnung nach Anspruch 12, **gekennzeichnet** durch Pyrogallol.

14. Anordnung nach einem der Ansprüche 1 bis 11, **dadurch gekennzeichnet,** daß die Beschichtung (18) wenigstens eine aprotische Cosubstanz enthält.

15. Anordnung nach Anspruch 14, **gekennzeichnet** durch veretherte Polyethylenglykole.

16. Anordnung zur Messung des Partialdruckes von Gasen und Dämpfen mit einem SAW-Resonator, der mit als Interdigitalwandler wirkenden Elektroden versehen ist und Reflektoren enthält und mit einer Beschichtung versehen ist, deren elektrische Eigenschaften sich unter der Einwirkung der Gase ändern, **dadurch gekennzeichnet,** daß die Beschichtung (18) wenigstens teilweise aus einem Gemisch von mindestens einem basischen oder sauren Farbbildner oder Fabstoff und mindestens einer komplementären sauren oder basischen Verbindung besteht.

17. Anordnung nach Anspruch 16, **dadurch gekennzeichnet,** daß die Beschichtung (18) als Farbbildner Triphenylmethan-Systeme enthält.

18. Anordnung nach Anspruch 17, **dadurch gekennzeichnet,** daß die Beschichtung (18) Kristallviolettlacton enthält.

19. Anordnung nach Anspruch 16, **dadurch gekennzeichnet,** daß die Beschichtung (18) als Farbstoff solche des Triphenylmethan-Systems enthält.

20. Anordnung nach Anspruch 19, **dadurch gekennzeichnet,** daß die Beschichtung (18) Phthaleine oder Sulfonphthaleine enthält.

21. Anordnung nach Anspruch 16 bis 20, **dadurch gekennzeichnet,** daß die Beschichtung (18) als saure Verbindung Bisphenol-A und/oder Salicylsäure enthält.

22. Anordnung nach Anspruch 16 bis 20, **dadurch gekennzeichnet,** daß die Beschichtung (18) als basische Verbindung p-Toluidin oder p-Chloranilin enthält.

23. Anordnung nach Anspruch 1 oder 16, **dadurch gekennzeichnet,** daß die Beschichtung (18) den Oberflächenbereich (21) zwischen den beiden Elektroden (12 und 13) und den Oberflächenbereich (22) zwischen der Elektrode (12) und dem Reflektor (16) sowie den Oberflächenbereich (23) zwischen der Elektrode (13) und dem Reflektor (17) sowie die Elektroden (12 und 13) und wenigstens teilweise die Reflektoren (16 und 17) bedeckt.

24. Anordnung nach einem der Ansprüche 1, 16 und 23, **dadurch gekennzeichnet,** daß die Dicke der Beschichtung (18) wenigstens 10 nm und höchstens 250 nm beträgt.

25. Anordnung nach Anspruch 24, **dadurch gekennzeichnet,** daß die Dicke der Beschichtung (18) wenigstens 20 und höchstens 200 nm beträgt.

FIG 1

FIG 2

FIG 3

7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | ANALYTICAL CHEMISTRY, Band 60, Nr. 3, 1. Februar 1988, Seiten 230-235, American Chemical Society, Washington, DC, US; M.S. NIEUWENHUIZEN et al.: "Metallophthalocyanines as chemical interfaces on a surface acoustic wave gas sensor for nitrogen dioxide" --- | 1,2,8,9 ,23 | G 01 N 29/00<br>G 01 N 27/00 |
| A | US-A-4 361 026 (MULLER et al.) * Zusammenfassung; Spalte 3, Zeile 63 - Spalte 4, Zeile 66 * --- | 1 | |
| A,D | US-A-4 598 224 (BALLATO) * Titelseite * --- | 1 | |
| A,D | US-A-4 312 228 (WOHLTJEN) * Titelseite * --- | 1 | |
| A | PROCEEDINGS OF THE 41ST ANNUAL FREQUENCY SYMPOSIUM 1987, Philadelphia, Pennsylvania, 1987, IEEE Cat. No. 87CH2427-3, pages 333-338, IEEE, New York, US; R.M. WHITE: "New prospects for acoustic sensors: an overview" * Pages 335-336 * ----- | 1,10,11 ,23 | |

**RECHERCHIERTE SACHGEBIETE (Int. Cl.5)**

G 01 N

Der vorliegende Recherchenbericht wurde für alle Patentansprüche erstellt

| Recherchenort | Abschlußdatum der Recherche | Prüfer |
|---|---|---|
| DEN HAAG | 16-05-1990 | KOUZELIS D. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

......................................................................
& : Mitglied der gleichen Patentfamilie, übereinstimmendes Dokument